# EUROPEAN PATENT SPECIFICATION

(11) **EP 0 772 376 B1**
(45) Date of publication and mention of the grant of the patent: **19.12.2001**
(21) Application number: 96307758.1
(22) Date of filing: 25.10.1996
(51) Int. Cl.: H05B 33/08

(54) **Electric luminescence driver**
Schwingschaltung für EL Element
Oscillateur pour élément EL

(30) Priority: 30.10.1995 JP 28149795
(43) Date of publication of application: 07.05.1997
(73) Proprietor: SGS-THOMSON MICROELECTRONICS K.K., Minato-ku, Tokyo 108 (JP)
(72) Inventor: Mihara, Masaki, Cyuo-ku, Chiba-shi, Chiba (JP)
(74) Representative: Palmer, Roger

(56) References cited:
- US-A- 5 313 141
- US-A- 5 349 269

## Description

This invention has to do with direct current boost converters which drive capacitive loads such as electroluminescent panels (hereafter referred to as EL panels).

Various types of these direct current boost converters are widely known, and they are divided into those using one coil and those using two coils.

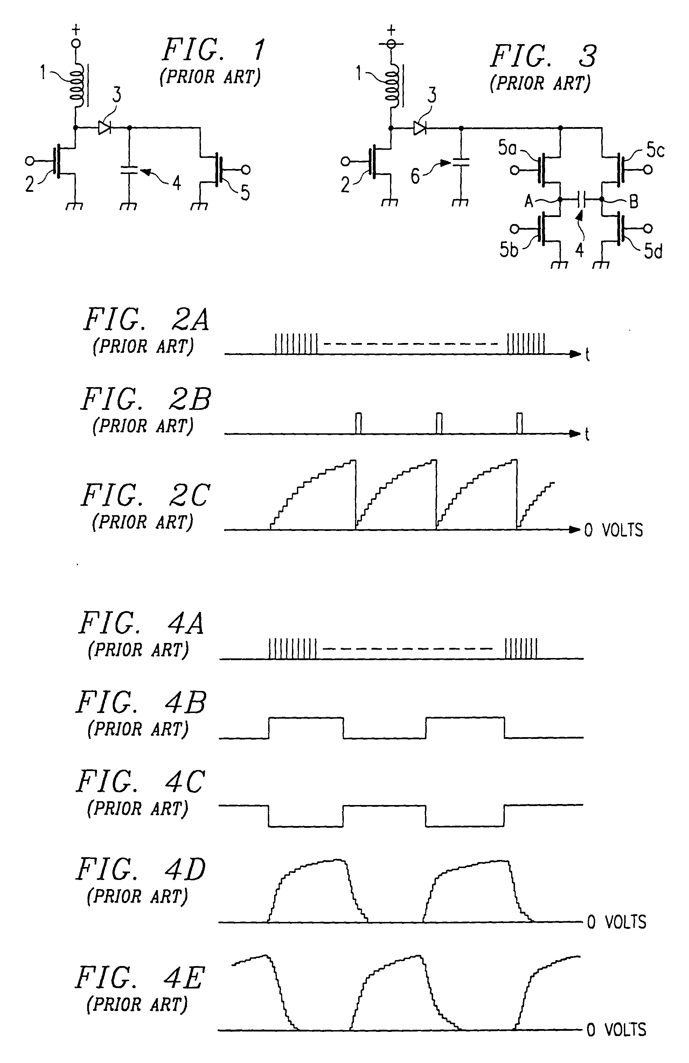

Figure 1 shows an example of a conventional direct current boost converter using one coil. The coil (1) and the first transistor (2) are connected in series between the positive terminal and negative terminal (grounding terminal) of the direct current source, and the node of this coil and the first transistor is connected through the diode (3) to the node of the EL panel (4) and the second transistor (5). The other terminal of this EL panel (4) and the second transistor (5) is connected to the negative terminal of the direct current source. The clock signal shown in Figure 2A is applied to the gate of the first transistor (2), and a gate signal with a repeating frequency which is lower than the clock signal shown in Figure 2B is applied to the gate of the second transistor (5).

With respect to this example of a direct current boost converter, when a clock signal is applied to the gate of the first transistor (2) during the period in which the second transistor (5) is off, a voltage which gradually increases, as shown in Figure 2C, is applied to the EL panel (4).

Figure 3 shows another example of a conventional direct current boost converter using one coil, and this converter is described in the detailed explanations of U.S. Patent Nos. 4,527,096 and 4,208,869. The coil (1) and first transistor (2) are connected in series between the positive terminal and negative terminal (grounding terminal) of the direct current source, and that node is grounded through the diode (3) and the capacitor (6). The node of this diode (3) and the capacitor (6) is connected to the switching bridge circuit which is composed of the second and third transistors (5a) and (5b), connected in series, and the fourth and fifth transistors (5c) and (5d), connected in series, and is connected between the node (A) of the [line to the] EL panel (4) and the second and third transistors (5a) and (5b), and the node (B) of the fourth and fifth transistors (5c) and (5d).

The clock signal shown in Figure 4A is applied to the gate of the first transistor (2), and the gate signal shown in Figure 4B is applied to the gates of the second and fifth transistors (5a) and (5d), and the second gate signal having the opposite phase to the first gate signal, as shown in Figure 4C, is applied to the gates of the third and fourth transistors (5b) and (5c). Therefore, the second and fifth transistors (5a) and (5d) go on simultaneously, and then the third and fourth transistors (5b) and (5c) go on simultaneously. As a result, a boosted voltage is applied to the nodes (A) and (B) as shown in Figures 4D and E.

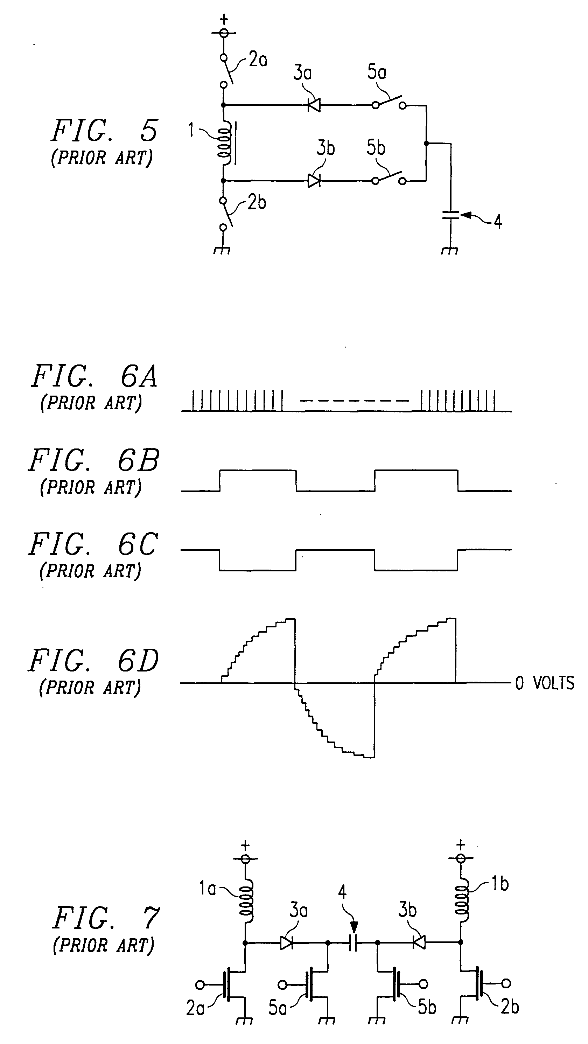

Figure 5 shows another example of a conventional direct current boost converter using one coil, and this is described in the detailed explanation of U.S. Patent 5,313,141. The coil (1) and series circuit of the first and second switching elements (2a) and (2b) is connected between the positive and negative terminals of the direct current source, and the node between the first switching element (2a) and the coil (1) is connected to the cathode of the first diode (3a), while its anode is connected to the third switching element (5a), the node of the second switching element (2b) and the coil (1) is connected to the anode of the second diode (3b), while its cathode is connected to the fourth switching element (5b), these third and fourth switching elements are connected to one terminal of the EL panel (4), and the other terminal of the EL panel is grounded.

A clock signal as shown in Figure 6A is applied to the first and second switching elements (2a) and (2b), and the first and second gate signals which have the opposite phase to one another, as shown in Figure 6B and C, are applied to the third and fourth switching elements (5a) and (5b). As a result, a boosted voltage is applied between the two terminals of the EL panel (4) as shown in Figure 6D.

Figure 7 shows an example of a conventional direct current boost converter using two coils, and this is described in the detailed explanation of U.S. Patent 5,349,269. The series circuit of the first coil (1a) and the first transistor (2a) is connected between the positive and negative terminals of a direct current source, and the node of this coil and transistor is connected to one terminal of the EL panel (4) through the first diode (3a). The node between the first diode (3a) and one terminal of the EL panel (4) is grounded through the second transistor (5a). Also, the series circuit between the second coil (1b) and the third transistor (2b) is connected between the positive and negative terminals of a direct current source, and the node between this coil and transistor is connected to the other terminal of the EL panel (4) through the second diode (3b). The node between the second diode (3b) and the other terminal of the EL panel (4) is grounded through the fourth transistor (5b).

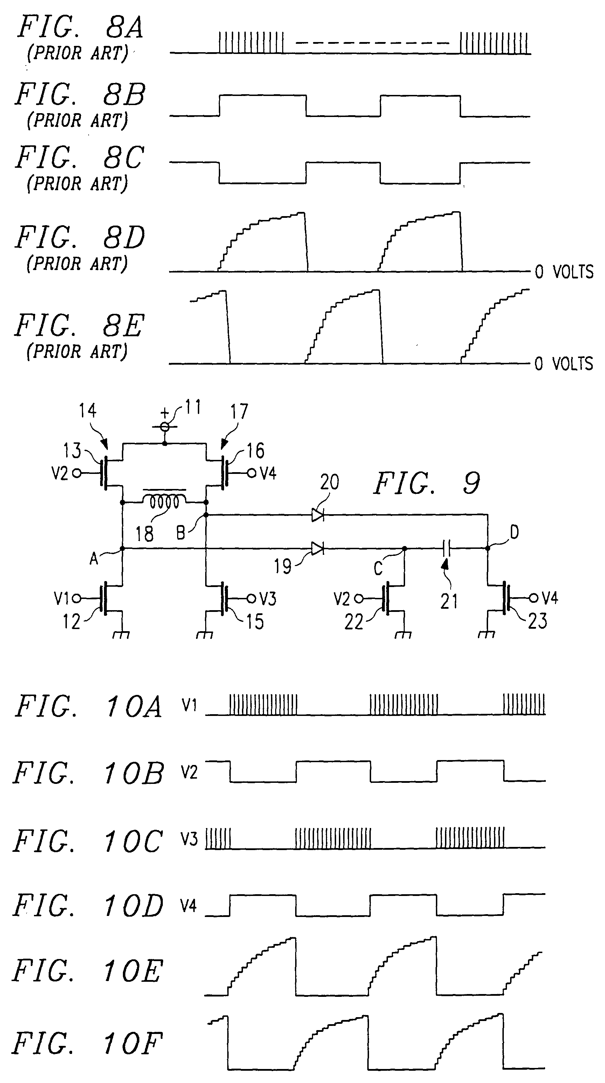

The clock signal shown in Figure 8A is applied to the gates of the first and third transistors (2a) and (2b), and the first and second gate signals of opposite phase to one another are applied to the gates of the second and fourth transistors (5a) and (5b). As a result, a boosted voltage is applied between the two terminals of the EL panel (4) as shown in Figures 8D and 8E.

With respect to the conventional direct current boost converter shown in Figure 1, although the structure is simple because it only requires a single coil, its weakness is that the voltage which is applied to the EL panel (4) is of single polarity, and the efficiency of light-emission is low.

With the conventional direct current boost converter shown in Figure 3, one coil is sufficient as well, and although it has the advantage that in addition to the structure being simple, a voltage of alternating polarity is applied to the EL panel (4), making the efficiency of light emission high, because the capacitor (6) is charged with a driving voltage, when the driving voltage becomes high, it requires a capacitor with a high resistance to voltage, and its weakness is its size and cost.

With the conventional direct current boost converter shown in Figure 5, one coil is sufficient as well, and since a voltage of dual polarity is applied to the EL panel (4) it has the advantage that the efficiency of light emission is high, but when the transistors which compose the switching elements (5a) and (5b) are composed of integrated circuits, a negative voltage is applied to a semiconductor substrate, so there is the need to construct it to prevent the flow of electricity into the semiconductor substrate, which makes the structure of the integrated circuit complex, resulting in the weakness of high cost.

With the conventional direct current boost converter shown in Figure 7, because the voltage which is applied to the EL panel (4) alternates in polarity, the efficiency of light emission is high; however, since it requires two coils (1a) and (1b), it has the weakness of complex structure and high cost.

A primary object of the invention is to mitigate the difficulties of the prior art. An embodiment of the invention provides a direct current boost converter which will eliminate these weaknesses, make the efficiency of light emission high by using one coil and causing the polarity of the driving voltage which is applied to the EL panel to alternate, and in addition make the structure simple and inexpensive.

According to the present invention, there is provided a direct current boost converter which drives a capacitive load, the converter comprising a first direct current branch circuit comprising first and second switching elements connected in series between the positive and negative terminals of a direct current source, the first switching element being driven by a first clock signal and the second switching element being driven by a first gate signal having a lower frequency than said first clock signal and a duty ratio of 50%; a second direct current branch circuit comprising third and fourth switching elements connected in series between the positive and negative terminals of the direct current source, the third switching element being driven by a second clock signal and the fourth switching element being driven by a second gate signal having a phase opposite the first clock signal; a coil connected from a first node between the first and second switching elements of the first direct current branch circuit to a second node between the third and fourth switching elements of the second direct current branch circuit; a first diode connected between the first node and one terminal of the capacitive load; a second diode connected between the second node and the other terminal of the capacitive load; a fifth switching element which is connected from a third node between the first diode and the one terminal of the capacitive load to the negative terminal of the direct current source, and which is driven by said first gate signal; and a sixth switching element which is connected from a fourth node between the above second diode and the other terminal of the capacitive load to the negative terminal of the direct current electrical load and which is driven by said second gate signal.

The load which is driven by the direct current boost converter of this invention may be one of various kinds of capacitive loads, but it is especially ideal for it to be a electric field light-emitting element.

The novel features believed characteristic of the invention are set forth in the appended claims. The invention itself, however, as well as a preferred mode of use, and further objects and advantages thereof, will best be understood by reference to the following detailed description of an illustrative embodiment when read in conjunction with the accompanying drawings, in which:
Figure 1 is a circuit diagram which shows the structure of one example of a conventional direct current boost converter for driving EL panels.
Figures 2A-2C are signal waveform diagrams to explain the operation of the same.
Figure 3 is a circuit diagram which shows the structure of another example of a conventional direct current boost converter for driving EL panels.
Figures 4A-4E are signal waveform diagrams to explain the operation of the same.
Figure 5 is a circuit diagram which shows the structure of another example of a conventional direct current boost converter for driving EL panels.
Figures 6A-7D [sic; 6D] are signal waveform diagrams to explain the operation of the same.
Figure 7 is a circuit diagram which shows the structure of another example of a conventional direct current boost converter for driving EL panels.
Figures 8A-8E are signal waveform diagrams to explain the operation of the same.
Figure 9 is a circuit diagram which shows the structure of one application example of the direct current boost converter for driving EL panels according to this invention.
Figures 10A-10F are signal waveform diagrams to explain the operation of the same.

Figure 9 is a circuit diagram which shows the structure of one application example of the direct current boost converter of this invention. The first serial branch circuit (14), in which the first and second switching transistors (12) and (13) are connected in series between the positive terminal (11) and the grounded negative terminal of the direct current source, is connected in parallel to the second serial branch circuit (17), in which the third and fourth switching transistors (15) and (16) are connected in series. The coil (18) is connected between the node (A) between the first and second switching transistors (12) and (13) of the first serial branch circuit (14), and the node (B) between the third and fourth switching transistors (15) and (16) of the second direct current branch circuit (17).

In addition, the above node (A) is connected to one terminal of the EL panel (21) by way of the first diode (19), and the node (B) is connected to the other terminal of the EL panel through the second diode (20). The node (C) between the cathode of the first diode (19) and one terminal of the EL panel (21) is grounded through the fifth switching transistor, and the node (D) between the cathode of the second diode (20) and the other terminal of the EL panel (21) is grounded through the sixth switching transistor (23).

Figure 10 shows the waveform of the signal which is applied to the gate of the switching transistor of the direct current boost converter described above.

Figure 10A shows the clock signal (V1) which is applied to the gate of the first switching transistor (12) of the first direct current branch circuit (14), and in this example the amplitude is set to 5 V, the repeating frequency is set to 8 KHz, and the duty cycle is set to 3:1. Also, the voltage of the direct current source is set at 3 V.

Figure 10B shows the gate signal (V2) which is applied to the gate of the second switching transistor (13), where the amplitude is set to 5 V, and the repeating frequency is set to 512 Hz.

Figure 10C shows the clock signal which is applied to the gate of the third switching transistor (15) of the second direct current branch circuit (17). Figure 10D shows the gate signal which is applied to the gate of the fourth switching transistor (16) of the second direct current branch circuit (17), and its phase is the opposite of the gate signal which is shown in Figure 10B above.

Also, a gate signal, which is the same as the gate signal (V2) which is applied to the gate of the second switching transistor (13) mentioned above, is applied to the gate of the fifth switching transistor (22), and a gate signal, which is the same as the gate signal (V4) which is applied to the gate of the fourth switching transistor (16) mentioned above, is applied to the gate of the sixth switching transistor (23).

Now, the first clock signal (V1) is applied to the gate of the first switching transistor (12) of the first direct current branch circuit (14), and due to the first gate signal (V2) which is applied to the gate of the second switching transistor (13), the second switching transistor (13) is off. In this case the third switching transistor (15) of the second direct current branch circuit (17) is off, but the fourth switching transistor (16) is on, and while the fifth switching transistor (22) is off, the sixth switching transistor (23) is on. Consequently, the voltage at node (A) gradually increases, as shown in Figure 10E, and this is applied to the EL panel (21). In this case, the potential of node (D) is zero, but the voltage of node (C) becomes positive. In this case the maximum value of the driving voltage is 120 V.

Next the first gate signal (V2) which is applied to the gate of the second switching transistor (13) of the first direct current branch circuit (14) reaches a high level and this transistor goes on, and as the second clock signal (V3) is applied to the third switching transistor (15) of the second direct current branch circuit (17), both the first switching transistor (12) of the first direct current branch circuit (14) and the fourth switching transistor (16) of the second direct current branch circuit (17) turn off, and in addition, the fifth switching transistor (22) turns on, and the sixth switching transistor (16) turns off. In this state, the voltage of node (B) gradually increases to 120 V as shown in Figure 10F, and this is applied to the EL panel (21). In this case, since the fifth switching transistor (22) is on, the node (C) has an potential of zero, and the voltage of the node (D) is positive.

As described above, with this example of a direct current boost converter, since a driving voltage which alternates in polarity is applied to the EL panel (21), which is a capacitive load, the efficiency of light emission of the EL panel is high, and it is possible for the EL panel to emit light using a low direct current voltage for long periods of time. Also, since only one coil (18) is used, the structure is simple, and it is possible to keep costs low.

This invention is not limited to the application example described above, and many changes and variations are possible. For example, with the above example, MOS-type field effect transistors were used as the switching elements, but it is also possible to use bipolar transistors. Furthermore, an EL panel was driven as the capacitive load in the application example described above, but it is possible to drive other capacitive loads as well.

As shown above, with respect to a direct current boost converter which drives a capacitive load according to this invention, since a single coil may be used the structure is simple, making low cost possible, and because it is possible to apply a voltage to the load which alternates in polarity, for example, when an EL panel is driven, it is possible to increase the efficiency of light emission.

## Claims

1. A direct current boost converter which drives a capacitive load, the converter comprising a first direct current branch circuit comprising first and second switching elements connected in series between the positive and negative terminals of a direct current source, the first switching element (12) being driven by a first clock signal (V1) and the second switching element (13) being driven by a first gate signal (V2) having a lower frequency than said first clock signal and a duty ratio of 50%; a second direct current branch circuit comprising third and fourth switching elements connected in series between the positive and negative terminals of the direct current source, the third switching element (15) being driven by a second clock signal (V3) and the fourth switching element (16) being driven by a second gate signal (V4) having a phase opposite the first clock signal (V1); a coil (18) connected from a first node (A) between the first (12) and second (13) switching elements of the first direct current branch circuit to a second node (B) between the third (15) and fourth (16) switching elements of the second direct current branch circuit; a first diode (19) connected between the first node (A) and one terminal of the capacitive load (21); a second diode (20)connected between the second node (B) and the other terminal of the capacitive load (21); a fifth switching element which is connected from a third node (c) between the first diode and the one terminal of the capacitive load to the negative terminal of the direct current source, and which is driven by said first gate signal (V2); and a sixth switching element which is connected from a fourth node (D) between the above second diode and the other terminal of the capacitive load to the negative terminal of the direct current electrical load and which is driven by said second gate signal (V4).

2. The direct current boost converter of claim 1 wherein said capacitive load is a electric field light-emitting element.

## Patentansprüche

1. Gleichstromverstärkungswandler, der eine kapazitive Last betreibt, wobei der Wandler aufweist, einen ersten Gleichstromschaltungsast- bzw. -zweig, der ein erstes und ein zweites Schaltelement aufweist, die in Serie bzw. in Reihe zwischen dem positiven und negativen Anschluss einer Gleichstromquelle angeschlossen sind, wobei das erste Schaltelement (12) durch ein erstes Taktsignal (V1) betrieben wird und das zweite Schaltelement (13) durch ein erstes Gatesignal (V2) betrieben wird, das eine niedriger Frequenz als das erste Taktsignal und ein Einschaltverhältnis von 50% hat; einen zweiten Gleichstromschaltungsast, der ein drittes und ein viertes Schaltelement aufweist, die in Reihe bzw. in Serie zwischen dem positiven und negativen Anschluss der Gleichstromquelle angeschlossen sind, wobei das dritte Schaltelement (15) durch ein zweites Taktsignal (V3) betrieben wird und das vierte Schaltelement (16) durch ein zweites Gatesignal (V4) betrieben wird, das eine Phase entgegengesetzt zu der des ersten Taktsignals (V1) hat; eine Spule (18), die von einem ersten Knoten (A) zwischen dem ersten (12) und dem zweiten (13) Schaltelement des ersten Gleichstromschaltungsastes zu einem zweiten Knoten (B) zwischen dem dritten (15) und dem vierten (16) Schaltelement des zweiten Gleichstromschaltungsastes angeschlossen ist; eine erste Diode (19), die zwischen dem ersten Knoten (A) und einem Anschluss der kapazitiven Last (21) angeschlossen ist; eine zweite Diode (20), die zwischen dem zweiten Knoten (B) und dem anderen Anschluss der kapazitiven Last (21) angeschlossen ist; ein fünftes Schaltelement, das von einem dritten Knoten (C) zwischen der ersten Diode und dem einen Anschluss der kapazitiven Last zu dem negativen Anschluss der Gleichstromquelle angeschlossen ist und das durch das erste Gatesignal (V2) betrieben wird; und ein sechstes Schalteiement, das von einem vierten Knoten (D) zwischen der obigen zweiten Diode und dem anderen Anschluss der kapazitiven Last zu dem negativen Anschluss der elektrischen Gleichstromlast angeschlossen ist und das durch das zweite Gatesignal (V4) betrieben wird.

2. Gleichstromverstärkungswandler nach Anspruch 1, wobei die kapazitive Last ein auf Grund eines elektrischen Feldes lichtemittierendes Element ist.

## Revendications

1. Convertisseur à courant continu, qui attaque une charge capacitive, le convertisseur comprenant une première branche de circuit à courant continu comportant un premier élément et un deuxième élément de commutation, montés en série entre les bornes positive et négative d'une source de courant continu, le premier élément de commutation (12) étant attaqué par un premier signal d'horloge (V1) et le deuxième élément de commutation (13) étant attaqué par un premier signal de déblocage (V2) ayant une fréquence plus que ledit premier signal d'horloge et un rapport cyclique de 50 % ; une seconde branche de circuit à courant continu comportant un troisième élément et un quatrième élément de commutation, montés en série entre les bornes positive et négative de la source de courant continu, le troisième élément de commutation (15) étant attaqué par un second signal d'horloge (V3) et le quatrième élément de commutation (16) étant attaqué par un second signal de déblocage (V4) ayant une phase en opposition à celle du premier signal d'horloge (V1) ; une bobine (18), reliée à partir d'un premier noeud (A), entre le premier élément (12) et le deuxième (13) élément de commutation de la première branche de circuit à courant continu, à un deuxième noeud (B), entre le troisième élément (15) et le quatrième (16) élément de commutation de la seconde branche du circuit à courant continu ; une première diode (19) montée entre le premier noeud (A) et une borne de la charge capacitive (21) ; une seconde diode (20) montée entre le deuxième noeud (B) et l'autre borne de la charge capacitive (21) ; un cinquième élément de commutation, qui est relié à partir d'un troisième noeud (c), entre la première diode et l'une des bornes de la charge capacitive, à la borne négative de la source de courant continu, et qui est attaqué par ledit premier signal de déblocage (V2) ; et un sixième élément de commutation, qui est relié à partir d'un quatrième noeud (D) , entre la seconde diode et l'autre borne de la charge capacitive, à la borne négative de la charge électrique à courant continu, et qui est attaqué par ledit second signal de déblocage (V4).

2. Oscillateur à courant continu selon la revendication 1, dans lequel ladite charge capacitive est un élément luminescent à champ électrique.
